# FASCICULE DE BREVET EUROPEEN

(11) **EP 2 033 892 B1**
(45) Date de publication et mention de la délivrance du brevet: **16.06.2010**
(21) Numéro de dépôt: 08015590.6
(22) Date de dépôt: 04.09.2008
(51) Int. Cl.: B64C 13/08, B64C 13/50, G05D 1/00, G05G 9/047

(54) **Vérin de compensation pour commande de vol de giravion**
Ausgleichstellantrieb zur Flugsteuerung eines Hubschraubers
Flight control compensating actuator for an helicopter

(30) Priorité: 07.09.2007 FR 0706266
(43) Date de publication de la demande: 11.03.2009
(73) Titulaire: EUROCOPTER, 13725 Marignane Cédex (FR)
(72) Inventeur: Vincent, Philippe, 83860 Nans les Pins (FR); Pellegrino, Sébastien, 13004 Marseille (FR); Gemmati, Bernard, 84360 Lauris (FR)
(74) Mandataire: GPI & Associés

(56) Documents cités:
- FR-A- 2 718 102
- US-A- 3 021 097
- US-A- 3 099 421
- US-A- 3 750 984
- US-A- 4 345 195
- US-A- 5 059 882
- US-A- 5 522 568

## Description

La présente invention est relative à un vérin électrique de compensation servant à actionner des commandes de vol d'un giravion.

A bord d'un giravion, un pilote automatique (« PA ») transmet des signaux ou données de commande à des vérins électriques montés en série dans les commandes de vol. Un vérin de compensation équipe également les commandes de vol, notamment la chaîne de commande en tangage et la chaîne de commande en roulis, afin de déplacer le point d'ancrage (ou « point milieu ») de la commande manuelle (« manche cyclique » notamment) à la disposition d'un pilote humain.

Un tel vérin de compensation, également qualifié de vérin « de trim » ou de « vérin parallèle », est aussi commandé par des signaux délivrés par un calculateur du PA. L'ensemble de ces vérins permet de commander une variation de la position d'une surface (ou organe) aérodynamique telle qu'une pale de rotor ou un aileron, en fonction d'un signal de consigne de position pour cette surface, tout en permettant au pilote humain de conserver la maîtrise des commandes de vol.

L'invention s'applique en particulier à un vérin de compensation comportant un moteur électrique entraînant un arbre de sortie par l'intermédiaire d'un réducteur de vitesse.

Le brevet FR-A-2718102 décrit un tel vérin de compensation dont le réducteur de vitesse est réversible, dont le moteur est autosynchrone, et qui comporte un capteur sensible à la position angulaire de l'arbre de sortie, un capteur sensible à la position angulaire de l'arbre du moteur, et un dispositif électronique de commande qui reçoit les signaux de ces capteurs et applique au moteur des courants nécessaires à l'obtention d'un couple correspondant à un effort antagoniste au mouvement d'un levier de commande de vol.

Comme indiqué dans ce brevet, il est par ailleurs connu de réaliser un vérin « de trim » dont la chaîne cinématique comporte, successivement accouplés dans cet ordre, entre le moteur et l'arbre dé sortie, un réducteur irréversible, un embrayage, un amortisseur visqueux, un second réducteur, une boite à ressort, et un dispositif de sécurité.

Un objectif de l'invention est de proposer un vérin de compensation pour commandes de vol dont la compacité, la robustesse, la simplicité, et la maintenabilité soient augmentées.

Un objectif de l'invention est de proposer un tel vérin ou servomoteur de compensation pour commandes de vol qui soit amélioré et/ou qui remédie, en partie au moins, aux lacunes ou inconvénients des vérins et servomoteurs de compensation connus.

L'invention s'applique donc à un vérin selon la revendication 1.

Par suite, le moteur comportant une cage tournante, il est avantageux que le vérin soit muni d'une garniture de freinage ainsi que d'un inducteur électromagnétique apte à engager ou désengager ladite garniture de freinage contre la cage tournante. La garniture de freinage étant fixée au boîtier du vérin, cette garniture de freinage permet d'ancrer temporairement la cage tournante au boîtier du vérin en minimisant la présence de jeu dans la chaîne cinématique.

Conformément à un aspect de l'invention, le réducteur de vitesse comporte plusieurs - en particulier trois ou quatre - modules ou étages de réduction de vitesse comportant chacun un couple d'engrenages ; les engrenages sont montés rotatifs selon deux axes de rotation parallèles entre eux, de préférence selon seulement deux axes de rotation parallèles entre eux et dont un axe est sensiblement confondu avec l'axe de rotation de l'arbre de sortie.

Selon un mode de réalisation, les deux axes de rotation sont sensiblement confondus, pour l'un avec l'axe de rotation du moteur, pour l'autre avec l'axe de rotation de l'arbre de sortie.

De préférence, au moins deux - en particulier trois ou quatre - modules ou étages de réduction de vitesse présentent un rapport de réduction identique.

Selon un mode préféré de réalisation, la valeur de ce rapport de réduction est voisine de dix.

Selon un autre aspect de l'invention, le vérin comporte un organe/capteur sensible au couple résistant transmis par l'arbre de sortie, cet organe étant intercalé entre - et couplé en rotation avec - l'arbre de sortie et le réducteur de vitesse. Cet organe/capteur comporte une structure déformable en torsion, deux capteurs sensibles à une position angulaire qui sont disposés de part et d'autre de la structure déformable en torsion, et un circuit connecté aux deux capteurs de position angulaire et arrangé pour déterminer une valeur de couple résistant en fonction des signaux délivrés par ces deux capteurs et de la raideur en torsion de la structure déformable.

La structure déformable en torsion peut comporter un ressort hélicoïdal, deux flasques parallèles liés aux extrémités du ressort, et deux butées reliant respectivement les flasques - et le ressort -, pour l'un au réducteur de vitesse, pour l'autre à l'arbre de sortie.

De préférence, les deux capteurs de position angulaire sont des capteurs magnétiques et incluent ledit premier capteur de position angulaire sensible à la position angulaire de l'arbre de sortie.

De préférence également, le(s) capteur(s) de position angulaire inclue(nt) (chacun) tout ou partie d'une couronne (rotative) aimantée/magnétisée, de façon non uniforme, ainsi qu'un capteur (fixe) sensible aux variations d'aimantation de la couronne aimantée.

De préférence encore, chaque couronne aimantée comporte une ou plusieurs pistes circulaires - ou en arc de cercle - concentriques comportant chacune plusieurs dizaines de pôles nord alternés avec des pôles sud ; en particulier, la couronne comporte deux pistes décalées angulairement, et le capteur sensible aux variations d'aimantation de la couronne aimantée est un capteur à effet Hall.

Selon d'autres caractéristiques préférentielles de l'invention :
- le vérin peut comporter une structure affaiblie formant un « fusible » mécanique pour interrompre la transmission de couple entre l'arbre de sortie et le moteur lorsque le couple résistant atteint une valeur déterminée ; cette structure affaiblie peut prendre la forme d'une goupille reliant deux portions d'arbre ; elle est de préférence intercalée entre le capteur de position angulaire de l'arbre de sortie et la structure déformable en torsion ;
- le vérin peur comporter un embrayage électromagnétique, à courants de Foucault ou à poudre, qui peut être intercalé entre la structure déformable en torsion et le réducteur ; alternativement, cet embrayage peur être intercalé entre deux étages du réducteur de vitesse ou au niveau du moteur.

L'invention permet de réaliser un vérin de compensation pour commandes de vol compact, robuste, simple, et facile à entretenir.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

Dans la présente demande, sauf indication explicite ou implicite contraire, les termes « signal » et « donnée » sont équivalents.

La figure 1 est une vue schématique en perspective d'un vérin selon l'invention, et illustre ses principaux composants selon un mode de réalisation.

La figure 2 est une vue schématique en plan du vérin de la figure 1.

La figure 3 est une vue schématique de la chaîne cinématique du vérin des figures 1 et 2.

Les figures 4 à 6 sont des vues schématiques d'un système à ressort servant à appliquer un couple s'opposant à l'effort appliqué par un pilote humain sur un manche de commande relié au vérin de compensation :

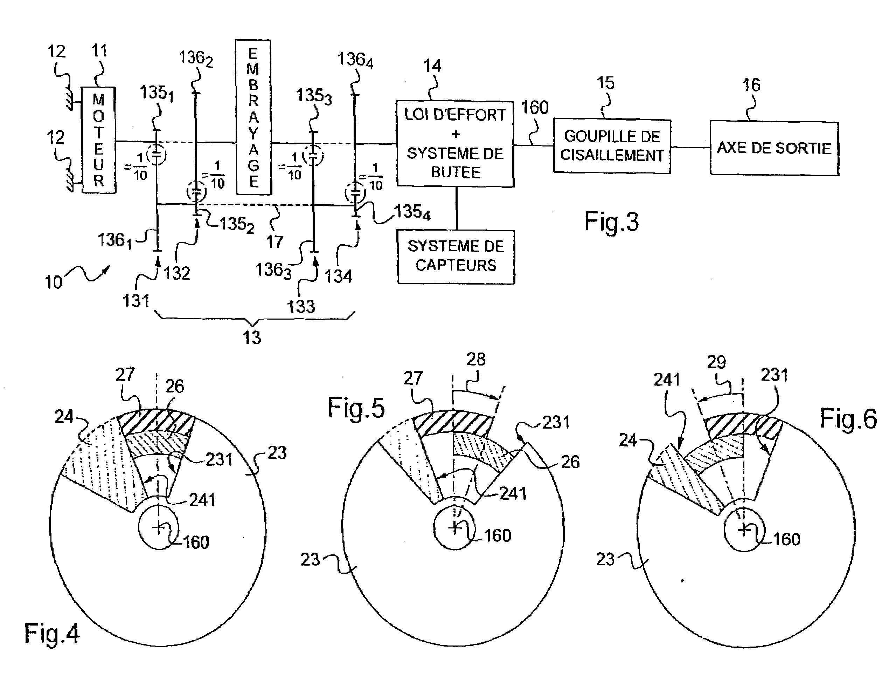

La figure 4 correspond à une configuration dans laquelle le couple produit par le ressort est nul ;
La figure 5 correspond à une configuration dans laquelle le couple produit par le ressort est non nul et dirigé dans un premier sens ;
La figure 6 correspond à une configuration dans laquelle le couple produit par le ressort est non nul et dirigé dans un second sens opposé au premier sens.

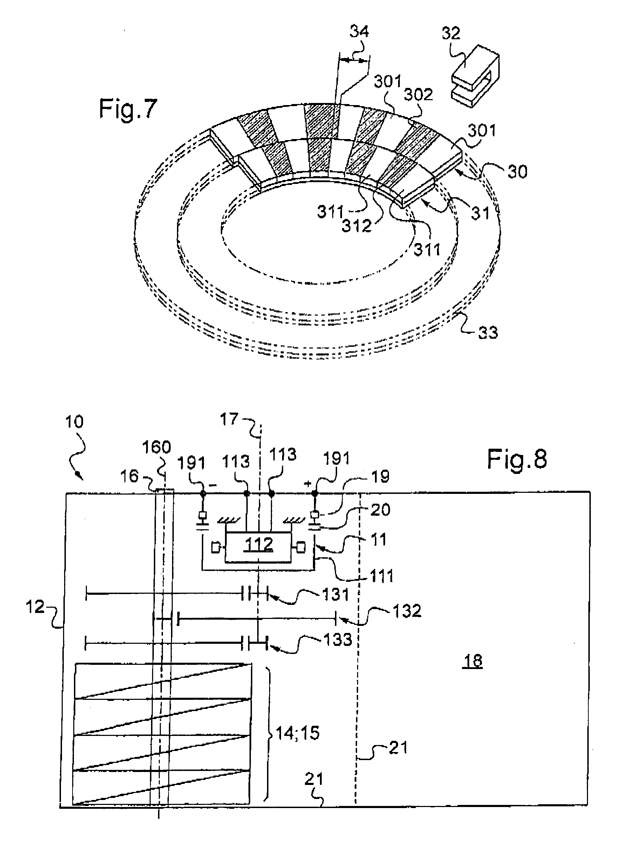

La figure 7 est une vue schématique en perspective d'un codeur magnétisé faisant partie d'un capteur de position angulaire d'un vérin selon l'invention.

La figure 8 est une vue schématique de la chaîne cinématique d'un vérin selon un autre mode de réalisation de l'invention.

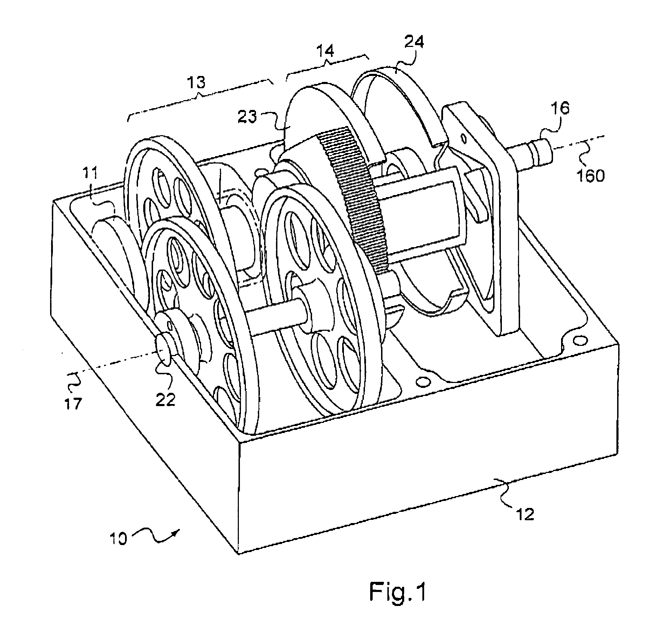

Par référence aux figures 1 à 3 notamment, le vérin 10 comporte un boîtier 12 recevant un moteur 11 auto synchrone à cage tournante, un réducteur 13 de vitesse entraîné par le moteur, un système 14 à ressort entraîné par le réducteur 13, un limiteur de couple résistant 15 entraîné par le système à ressort et entraînant l'arbre 16 de sortie du vérin.

Selon un mode de réalisation, l'amplitude du mouvement de rotation de l'arbre 16 peut se situer dans une plage allant de -40° environ à +40° environ, par référence à un point milieu.

Le vérin comporte en outre un circuit électronique (non représenté) pour l'alimentation du moteur 11 et l'asservissement en position de l'arbre de sortie du vérin.

Le réducteur comporte quatre étages 131 à 134 comportant chacun un pignon menant 1351, 1352, 1353, 1354 présentant un nombre de dents faible et un pignon mené 1361, 1362, 1363, 1364 engrenant avec le pignon menant et présentant un nombre de dents plus élevé que celui du pignon menant.

Les trois premier étages (1351, 1361), (1352, 1362), (1353, 1363) présentent le même rapport de réduction qui est voisin de dix, comme celui du quatrième étage (1354, 1364).

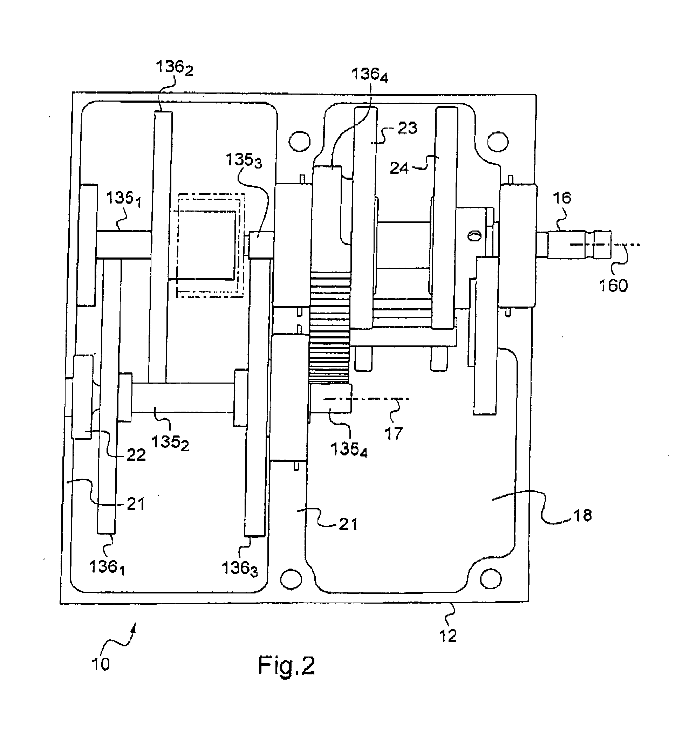

On observe figure 1 et 2 que les pignons 1351, 1362, 1353, 1364 sont montés rotatifs par rapport au carter 12 selon un axe confondu avec l'axe 160 commun de rotation de l'arbre 16 et du moteur 11, tandis que les pignons 1361, 1352, 1363, 1354 sont montés rotatifs par rapport au carter 12 selon un axe 17 parallèle à l'axe 160.

Les pignons/engrenages 1351, 1352, 1353, 1354, 1361, 1362, 1363, 1364 présentent une denture droite.

Dans le mode de réalisation correspondant à la figure 8, le réducteur 13 comporte trois étages 131 à 133 seulement, dont les engrenages sont montés rotatifs selon l'axe 160 de rotation de l'arbre de sortie 16 pour certains d'entre eux, et dont les autres engrenages sont montés rotatifs selon l'axe 17 de rotation du moteur 11.

Dans ce mode de réalisation, le moteur 11 comporte une cage tournante externe 111 et un inducteur 112 fixe relié par des bornes 113 à un circuit de commande du moteur.

Le vérin comporte en outre un moyen d'accouplement temporaire de la cage tournante 111 du moteur au boîtier 12. Par exemple, le moyen d'accouplement comporte un second inducteur électromagnétique 19 qui peut être alimenté, par l'intermédiaire de bornes 191, pour engager - ou au contraire désengager - une garniture 20 mobile de freinage contre la cage tournante 111 du moteur 11, et assurer ainsi une fonction d'ancrage (par blocage en rotation de la cage 111).

Dans les deux modes de réalisation, le boîtier 12 délimite un logement 18 recevant le circuit de commande (non représenté) du moteur,

Ce circuit de commande est connecté à un capteur sensible à la position angulaire de l'arbre de sortie, ce circuit délivrant un signal d'alimentation du moteur qui varie en fonction d'un signal de consigne de position appliqué au circuit de commande par un calculateur du PA, et en fonction des signaux délivrés par le capteur de position angulaire.

La conception du carter/boîtier 12 comportant une ou plusieurs cloisons ou parois 21 recevant des paliers 22 pour les arbres des organes rotatifs (pignons notamment) permet le montage de tous les éléments du vérin dans un seul boîtier, et permet de refermer celui-ci une fois les éléments (mécaniques, électriques, électroniques) assemblés et connectés entre eux.

Dans le mode de réalisation correspondant aux figures 1 à 6, le système 14 à ressort du vérin est associé à deux capteurs magnétiques respectivement sensibles à la position angulaire de deux flasques/disques parallèles 23, 24 auxquels est relié un ressort hélicoïdal d'axe 160, pour former un organe (ou capteur) sensible au couple résistant transmis par l'arbre de sortie. En effet, le ressort hélicoïdal est solidarisé aux deux flasques 23, 24 respectivement par ses deux spires extrémales.

Les deux flasques 23, 24 sont montés « flottants », c'est à dire mobiles en rotation, dans une certaine plage de décalage angulaire relatif, par rapport au pignon de sortie et à l'arbre de sortie du vérin,

Cet organe/capteur de couple est intercalé entre - et couplé en rotation avec - l'arbre de sortie et le réducteur de vitesse. Cet organe comporte une structure déformable en torsion, deux capteurs sensibles à une position angulaire qui sont disposés de part et d'autre de la structure déformable en torsion, et un circuit connecté aux deux capteurs de position angulaire et arrangé pour déterminer une valeur de couple résistant en fonction des signaux délivrés par ces deux capteurs et de la raideur en torsion de la structure déformable (i.e. du ressort).

La structure déformable en torsion comporte un ressort hélicoïdal et les deux flasques 23, 24 reliant le ressort au réducteur de vitesse et à l'arbre de sortie via des doigts 26,27.

De préférence, les deux capteurs de position angulaire sont des capteurs magnétiques et incluent ledit premier capteur de position angulaire sensible à la position angulaire de l'arbre de sortie.

Comme illustré particulièrement figures 4 à 6, le système à ressort comporte un premier doigt 26 solidaire en rotation de l'arbre de sortie 160 du réducteur de vitesse.

Le système à ressort comporte en outre un second doigt 27 solidaire en rotation de l'arbre de sortie 16 du vérin.

Selon le mode d'utilisation du vélin, le doigt 26 sert de butée fixe de précontrainte et le doigt 27 sert de butée d'effort, ou bien le doigt 27 sert de butée fixe de précontrainte et le doigt 26 sert de butée d'effort,

Chacune des deux butées 26 et 27 s'étend le long de -parallèlement à - l'axe 160 commun au dispositif 14 et à l'arbre de sortie, entre les flasques 23, 24 qui sont chacun muni d'une échancrure 231, 241 contre chacune desquelles les doigts peuvent s'appuyer.

Dans la configuration illustrée figure 4, chacune des butées 26, 27 est en appui contre les deux échancrures 231, 241. Dans cette position, le ressort est précontraint.

Dans la configuration illustrée figure 5, la butée 26 est en appui contre l'échancrure 231 tandis que la butée 27 est en appui contre l'échancrure 241. Dans cette position qui correspond à un décalage angulaire 28 des deux flasques 23, 24 selon l'axe 160 et dans un premier sens, la contrainte/torsion du ressort augmente, Ce décalage est mesuré par les deux capteurs sensibles à la position angulaire des flasques, comme précisé ci après.

Dans la configuration illustrée figure 6, la butée 26 est en appui contre l'échancrure 241 tandis que la butée 27 est en appui contre l'échancrure 231. Dans cette position qui correspond à un décalage angulaire 29 - de sens opposé au décalage 28 de la figure 5 - des deux flasques 23, 24 selon l'axe 160, la contrainte/torsion du ressort augmente également. Ce décalage est également mesuré par les deux capteurs sensibles à la position angulaire des flasques, comme précisé ci après.

Par référence à la figure 7 en particulier, chaque capteur de position angulaire inclue une couronne rotative 33 aimantée/magnétisée ainsi qu'un capteur fixe 32 sensible aux variations d'aimantation de la couronne aimantée. Une couronne 33 codée - ou « codeur » - est liée en rotation à chacun des flasques 23, 24.

Chaque couronne aimantée 33 comporte deux pistes 30, 31 ou couronnes en are de cercle concentriques comportant chacune plusieurs dizaines de secteurs magnétisés, les secteurs formant des pôles nord 301, 311 alternés avec des pôles sud 302, 312, les deux pistes étant décalées d'un angle 34.

Ainsi, une couronne codée est collée sur chaque flasque par exemple, chaque couronne pouvant présenter une échancrure à l'instar de la flasque à laquelle elle est solidarisée.

Ce dispositif de mesure angulaire permet de supprimer des détecteurs de contact généralement utilisés dans un système à ressort pour détecter l'action du pilote humain. Ce système a l'avantage d'être compact et de cumuler les fonctions de capteur de position et détecteur d'effort. Ces capteurs permettent d'éviter la présence de fils électriques liés à des pièces mobiles, et le codage « numérique » de la mesure de position angulaire résultant de la double pluralité de secteurs magnétiques alternés permet d'éviter l'effet d'hystérésis inhérent à l'utilisation de plusieurs capteurs ayant chacun leur hystérésis qu'il faudrait synchroniser.

Le vérin peut comporter un embrayage électromagnétique, à courants de Foucault ou à poudre, qui peut être intercalé entre la structure déformable en torsion et le réducteur ; alternativement, cet embrayage peut être intercalé entre deux étages du réducteur de vitesse.

Le vérin peut comporter un dispositif de friction accouplé ou intégré au moteur « brushless » et commandé par ledit circuit de commande, La chaîne cinématique de réduction réversible permet de mettre en rotation l'arbre de sortie sous les ordres du pilote automatique.

Le système de loi d'effort à ressort crée au niveau du manche une résistance mécanique qui induit une déformation du ressort détectée par les capteurs de position. Une goupille formant un « fusible mécanique » est intégrée en cas de blocage du système. L'activation du vérin permet au pilote de relâcher les commandes et de laisser le pilote automatique gérer les phases de vol que le pilote a sélectionné.

Le pilote automatique commande l'action du vérin en alimentant le moteur 11. Ce dernier entraîne l'arbre de sortie 16 par la mécanique de réduction 13. Lorsque le pilote prend la main, il passe à travers le dispositif 14 de loi d'effort à ressort et les capteurs de positions angulaires envoient une information au pilote automatique pour qu'il coupe l'action du moteur 11, dans certains cas.

En cas de blocage du mécanisme, la goupille se rompt pour laisser l'arbre de sortie libre en rotation, sans perdre l'information de position angulaire de cet arbre.

Un amortisseur d'oscillations angulaires peut être intégré au moteur ou à l'embrayage électromagnétique, Lorsque le pilote relâche les commandes, le moteur ou l'embrayage freinent pour absorber l'énergie emmagasinée par le dispositif à ressort.

## Revendications

1. Vérin (10) comportant un moteur (11) électrique rotatif (auto)synchrone, un réducteur (13) de vitesse réversible couplé au moteur pour être entraîné en rotation par celui ci, un arbre (16) de sortie couplé au réducteur de vitesse pour être entraîné en rotation par ce dernier, un premier capteur de position angulaire sensible à la position angulaire de l'arbre de sortie, et un circuit de commande connecté au capteur de position angulaire et au moteur, ce circuit délivrant un signal d'alimentation du moteur qui varie en fonction d'un signal de consigne de position appliqué au circuit de commande et en fonction des signaux délivrés par le capteur de position angulaire, le réducteur de vitesse comportant plusieurs modules ou étages (131 à 134) de réduction de vitesse ayant chacun un couple d'engrenages, lesdits engrenages étant montés rotatifs selon deux axes (17, 160) de rotation parallèles,
**caractérisé en ce que** ledit moteur (11) comportant une cage tournante (111), ledit vérin (10) est muni d'une garniture de freinage (20) et d'un inducteur électromagnétique (19) apte à engager ou désengager ladite garniture de freinage (20) contre ladite cage tournante (111).

2. Vérin selon la revendication 1 dans lequel le réducteur de vitesse comporte trois ou quatre modules ou étages de réduction de vitesse, au moins deux modules ou étages de réduction de vitesse présentant un rapport de réduction identique.

3. Vérin selon la revendication 1 ou 2 dans lequel les engrenages sont montés rotatifs selon seulement deux axes de rotation qui sont parallèles entre eux et dont l'un est confondu avec l'axe (160) de l'arbre (16) de sortie.

4. Vérin selon l'une quelconque des revendications 1 à 3 qui comporte un organe (14) sensible au couple résistant transmis par l'arbre de sortie, cet organe étant intercalé entre - et couplé en rotation avec - l'arbre de sortie et le réducteur de vitesse, cet organe comportant une structure déformable en torsion, deux capteurs sensibles à une position angulaire qui sont disposés de part et d'autre de la structure déformable en torsion, et un circuit connecté aux deux capteurs de position angulaire et arrangé pour déterminer une valeur de couple résistant en fonction des signaux délivrés par ces deux capteurs et en fonction de la raideur en torsion de la structure déformable.

5. Vérin selon la revendication 4 dans lequel la structure déformable en torsion comporte un ressort hélicoïdal, deux flasques (23, 24) parallèles liés aux extrémités du ressort, un premier doigt (26) reliant les flasques et le ressort au réducteur de vitesse, et un deuxième doigt reliant les flasques et le ressort à l'arbre de sortie du vérin.

6. Vérin selon l'une quelconque des revendications 4 ou 5 dans lequel les deux capteurs de position angulaire sont des capteurs magnétiques et incluent ledit premier capteur de position angulaire sensible à la position angulaire de l'arbre de sortie.

7. Vérin selon l'une quelconque des revendications 1 à 6 dans lequel le(s) capteur(s) de position angulaire inclue(nt) (chacun) tout ou partie d'une couronne rotative (33) aimantée/magnétisée ainsi qu'un capteur (32) fixe sensible aux variations d'aimantation de la couronne aimantée.

8. Vérin selon la revendication 7 dans lequel chaque couronne aimantée comporte deux pistes (30, 31) circulaires - ou en arc de cercle - concentriques comportant chacune plusieurs dizaines de pôles nord alternés avec des pôles sud, les deux pistes étant décalées angulairement, et le capteur (32) sensible aux variations d'aimantation est un capteur à effet Hall.

9. Vérin selon l'une quelconque des revendications 4 à 8 qui comporte une structure (15) affaiblie formant un « fusible mécanique » pour interrompre la transmission de couple entre le moteur et l'arbre de sortie lorsque le couple résistant atteint une valeur déterminée, la structure affaiblie étant intercalée entre le capteur de position angulaire de l'arbre de sortie et la structure déformable en torsion.

10. Vérin selon l'une quelconque des revendications 4 à 9, qui comporte un embrayage électromagnétique intercalé entre la structure déformable en torsion et le réducteur.

11. Vérin selon l'une quelconque des revendications 1 à 9, qui comporte un embrayage électromagnétique intercalé entre deux étages du réducteur de vitesse.

## Claims

1. Actuator (10) comprising an (auto)synchronous rotary electric motor (11), a reversible speed reducer (13) coupled to the motor to be driven in rotation thereby, an output shaft (16) coupled to the speed reducer to be driven in rotation thereby, a first angular position sensor responsive to the angular position of the output shaft, and a control circuit connected to the angular position sensor and to the motor, this circuit delivering a motor power supply signal that varies as a function of a position setpoint signal applied to the control circuit and as a function of signals delivered by the angular position sensor, the speed reducer comprising a plurality of speed-reducing modules or stages (131 to 134) each having a pair of gears, said gears being mounted to rotate on two parallel axes of rotation (17, 160),
**characterised in that** said motor (11) comprises a rotating cage (111), said actuator (10) is provided with a brake lining (20) and with an electromagnetic inductor (19) which is able to engage or disengage said brake lining (20) against said rotating cage (111).

2. Actuator according to Claim 1, in which the speed reducer comprises three or four speed-reducing modules or stages, at least two speed-reducing modules or stages having an identical reduction ratio.

3. Actuator according to Claim 1 or 2, in which the gears are mounted to rotate about only two axes of rotation, which axes are mutually parallel and one of which coincides with the axis (160) of the output shaft (16).

4. Actuator according to any one of Claims 1 to 3, comprising a member (14) responsive to the resisting torque transmitted by the output shaft, this member being interposed between - and coupled to rotate with - the output shaft and the speed reducer, this member comprising a torsionally deformable structure, two sensors that are responsive to angular position and that are disposed on both sides of the torsionally deformable structure, and a circuit connected to the two angular position sensors and arranged to determine a resisting torque value as a function of the signals delivered by these two sensors and as a function of the torsional stiffness of the deformable structure.

5. Actuator according to Claim 4, in which the torsionally deformable structure comprises a helical spring, two parallel plates (23, 24) connected to the ends of the spring, a first finger (26) connecting the plates and the spring to the speed reducer, and a second finger connecting the plates and the spring to the output shaft of the actuator.

6. Actuator according to either one of Claims 4 or 5, in which the two angular position sensors are magnetic sensors and include said first angular position sensor that is responsive to the angular position of the output shaft.

7. Actuator according to any one of Claims 1 to 6, in which the or each angular position sensor includes all or part of a magnetised rotary ring (33) and a stationary sensor (32) responsive to variations in the magnetisation of the magnetised ring.

8. Actuator according to Claim 7, in which each magnetised ring has two circular or circular-arc tracks (30, 31) that are concentric, each comprising several tens of north poles alternating with south poles, the two tracks being angularly offset, and the sensor (32) responsive to variations in magnetisation is a Hall effect sensor.

9. Actuator according to any one of Claims 4 to 8, comprising a weakened structure (15) forming a "mechanical fuse" for interrupting torque transmission between the motor and the output shaft when the resisting torque reaches a determined value, the weakened structure being interposed between the angular position sensor of the output shaft and the torsionally deformable structure.

10. Actuator according to any one of Claims 4 to 9, comprising an electromagnetic clutch interposed between the torsionally deformable structure and the reducer.

11. Actuator according to any one of Claims 1 to 9, comprising an electromagnetic clutch interposed between two stages of the speed reducer.

## Patentansprüche

1. Stellantrieb (10) mit einem sich drehenden elektrischen (Auto)synchronmotor, einem reversiblen Untersetzungsgetriebe (13), welches an den Motor gekoppelt ist, um von diesem gedreht zu werden, einer Ausgangswelle (13), die an das Reduktionsgetriebe gekoppelt ist, um von diesem gedreht zu werden, einem ersten Winkelpositionsdetektor zur Erfassung der Winkelposition der Ausgangswelle und einer Steuerschaltung, die an den Winkelpositionsdetektor und den Motor geschaltet ist, wobei dieser Schaltkreis ein Stromversorgungssignal des Motors liefert, welches sich in Abhängigkeit von einem Steuersignal der Winkelstellung ändert, welches an die Steuerschaltung angelegt ist, sowie in Abhängigkeit von Signalen, die von dem Winkelpositionsdetektor geliefert werden, wobei das Reduktionsgetriebe mehrere Reduktionsstufen (131-134) der Geschwindigkeit aufweist, die jeweils ein Zahnradpaar aufweisen, wobei die Zahnräder drehbar um zwei parallele Drehachsen (17, 160) angeordnet sind, **dadurch gekennzeichnet, dass** der Motor (11) einen sich drehenden Käfig (111) aufweist, wobei der Stellantrieb (10) mit einem Bremsbelag (20) und einer elektromagnetischen Erregerspule (19) ausgerüstet ist, mit der der Bremsbelag (20) gegen den Drehkäfig (111) in Eingriff gebracht werden kann oder von diesem gelöst werden kann.

2. Stellantrieb nach Anspruch 1, bei dem das Reduktionsgetriebe drei oder vier Geschwindigkeitsreduktionsstufen aufweist, wobei mindestens zwei Geschwindigkeitsreduktionsstufen ein identisches Reduktionsverhältnis aufweisen.

3. Stellantrieb nach Anspruch 1 oder 2, bei dem die Zahnräder lediglich auf zwei Drehachsen drehbar montiert sind, die parallel zueinander verlaufen, wobei eine der Achse (160) auf der Achse der Ausgangswelle (16) liegt.

4. Stellantrieb nach einem der Ansprüche 1 bis 3, mit einem Organ (14), welches auf das Widerstandsmoment reagiert, das von der Ausgangswelle übertragen wird, wobei dieses Organ zwischen der Ausgangswelle und dem Geschwindigkeitsreduktionsgetriebe angeordnet und drehbar gekoppelt ist, wobei dieses Organ einen torsionsverformbaren Aufbau aufweist und zwei auf eine Winkelstellung empfindlich reagierende Detektoren, die zu beiden Seiten des torsionsverformbaren Aufbaus angeordnet sind, und einen Schaltkreis, der mit den beiden Winkelpositionsdetektoren verbunden und so aufgebaut ist, dass er einen Wert des Widerstandsmoments in Abhängigkeit von den von den beiden Detektoren gelieferten Signalen und in Abhängigkeit von der Torsionssteifigkeit des verformbaren Aufbaus bestimmt.

5. Stellantrieb nach Anspruch 4, bei dem der torsionsverformbare Aufbau eine wendelförmige Feder, zwei parallele Flansche (23, 24), die mit den Enden der Feder verbunden sind und einen ersten Stift (26) aufweist, der die Flansche und die Feder mit dem Geschwindigkeitsreduktionsgetriebe verbindet, sowie einen zweiten Stift, der die Flansche und die Feder mit der Ausgangswelle des Stellantriebs verbindet.

6. Stellantrieb nach einem der Ansprüche 4 oder 5, bei dem die beiden Winkelpositionsdetektoren magnetische Detektoren sind und den ersten Winkelpositionsdetektor, der die Winkelposition der Ausgangswelle erfasst, umfassen.

7. Stellantrieb nach einem der Ansprüche 1 bis 6, bei dem der Detektor bzw. die Detektoren der Winkelposition (jeweils) ganz oder teilweise eine drehbare Krone (33) umfasst bzw. umfassen, die magnetisiert ist, sowie einen feststehenden Detektor (32), der die Änderungen der Magnetisierung der magnetisierten Krone erfasst.

8. Stellantrieb nach Anspruch 7, bei dem jede magnetisierte Krone zwei kreisförmige Spuren (30, 31) - oder konzentrische Kreise - aufweist, die jeweils mehrere Zehnerbündel von Nordpolen, die sich mit Südpolen abwechseln, aufweisen, wobei die beiden Spuren winkelmäßig versetzt sind und der Detektor (32), der die Änderungen in der Magnetisierung erfasst, ein Hall-Effekt-Detektor ist.

9. Stellantrieb nach einem der Ansprüche 4 bis 8, mit einem abgeschwächten Aufbau (15), der eine "mechanische Sicherung" bildet, um die Übertragung des Drehmoments zwischen dem Motor und der Ausgangswelle zu unterbrechen, wenn das Widerstandsmoment einen vorbestimmten Wert erreicht, wobei der abgeschwächte Aufbau zwischen dem Winkelpositionsdetektor der Ausgangswelle und dem torsionsverformbaren Aufbau angeordnet ist.

10. Stellantrieb nach einem der Ansprüche 4 bis 9, mit einer elektromagnetischen Kupplung, die zwischen dem torsionsverformbaren Aufbau und dem Getriebe angeordnet ist.

11. Stellantrieb nach einem der Ansprüche 1 bis 9, mit einer elektromagnetischen Kupplung zwischen zwei Getriebestufen des Geschwindigkeitsverminderungsgetriebes.
